Europäisches Patentamt

European Patent Office

Office européen des brevets

(11) Publication number: **0 256 705**
**A2**

# (12) EUROPEAN PATENT APPLICATION

(21) Application number: 87306686.4

(22) Date of filing: 29.07.87

(51) Int. Cl.⁴: **G02F 1/137** , G02F 1/19

(30) Priority: 08.08.86 GB 8619385

(43) Date of publication of application:
24.02.88 Bulletin 88/08

(84) Designated Contracting States:
CH DE FR IT LI NL

(71) Applicant: STC PLC
10, Maltravers Street
London, WC2R 3HA(GB)

(72) Inventor: **Crossland, William Alden**
**15, School Lane**
**Harlow Essex(GB)**
Inventor: **Ross, Peter William**
**40, Rainsford Road**
**Stansted Essex(GB)**
Inventor: **Collings, Neil**
**25, Cedar Court Station Road**
**Epping Essex(GB)**
Inventor: **Hanna, Simon**
**88, Perse Way**
**Cambridge Cambridgeshire(GB)**

(74) Representative: **Laurence, Simon French et al**
**STC Patents West Road**
**Harlow Essex CM20 2SH(GB)**

(54) Spatial light modulator.

(57) A spatial light modulator in which light is directed towards one major surface of a liquid crystal layer 10 at an angle providing attenuated total reflection. The value of this attenuation is modulated by electrically induced refractive index changes in the liquid crystal layer. The liquid crystal layer may form a graded index reflector and incorporate a dye so that light penetrating deeper into the layer is more heavily attenuated.

EP 0 256 705 A2

## SPATIAL LIGHT MODULATOR

This invention relates to spatial light modulators, and in particular to such modulators that rely for their operation upon electro-optic effects induced in liquid crystal media.

A transmission type liquid crystal cell in which light enters the liquid crystal layer by one of its major surfaces and leaves by the other can form a straightforward form of spatial light modulator if it is matrix addressed and incorporates a pleochroic dye dispersed in the liquid crystal medium. However, for many applications there are distinct advantages to be gained from performing matrix addressing via an active semiconductor backing to the liquid crystal layer. Typically this is provided by a slice of single crystal silicon. The use of such a backing means that the cell is not suitable for operation in a transmission type mode, and instead a conventional type of active siliconbacked matrix addressed liquid crystal cell such as is for instance described in Patent Specification No. 2079022A operates in a reflex mode in which light enters the liquid crystal layer by its front surface, is reflected by its rear surface, and leaves the layer once again by its front surface.

To use such a reflex type cell as a spatial light modulator would require a quality of specular reflection that is not typically easily attained with the degree of flatness produced by conventional semiconductor processing of single crystal slices.

In EP 0 021 336 A there is described an optical projection display device in which light suffers attenuated total internal reflection in a silver film on the base of a prism by virtue of plasmon resonance effects which are modulated electrically. Specifically this modulation is achieved by changing the refractive index of the medium adjacent the silver film in order to move closer to, or further away from, the resonance condition. The preferred method of changing the refractive index is stated to be electro-chemical and so is not suited to form the basis of a spatial light modulator. Alternative methods are however listed, and amongst these is included 'molecular orientation'. EP 0 021 336 A is thus not directed to spatial light modulators, nor is it concerned with the reflecting properties of active silicon single crystal slices, but its teachings concerning modulating a plasmon resonance condition can, at least in principle, be applied to an active silicon backed liquid crystal controlled spatial light modulator to make the instrument sensitive to small deviations from specular flatness of the silicon surface.

The present invention does not employ plasmon resonance effects but is concerned with a solution to the problem in which the incident light is directed through a substantially transparent medium to a liquid crystal layer in which refractive index changes are used to modulate Fresnel reflection.

A feature of this arrangement is that if the light is incident upon the liquid crystal layer plane polarised in the plane of incidence and with an angle of incidence lying between the Brewster angle and the critical angle, then changes in refractive index will produce a large change in the reflectivity without change of phase. This contrasts with many other types of spatial light modulator in which amplitude changes are generally accompanied by changes in phase. Separation of amplitude modulation from phase modulation is desirable. One reason is that, if amplitude modulation is uncontaminated with phase modulation, then the carrier is intrinsically capable of additionally supporting entirely independent phase modulation that is uncontaminated with amplitude modulation. A second reason is that certain operations, such as the performing of a Fourier transform with the aid of a lens, are liable to introduce intermodulation between phase and amplitude, and this is generally unwelcome.

According to the present invention there is provided a spatial light modulator in which light is directed through a substantially transparent medium to one major surface of a liquid crystal layer at an oblique angle providing attenuated reflection, the value of which attenuation is capable of being modulated by electrically induced refractive index changes in the liquid crystal layer.

The invention also provides a method of spatially modulating a light beam in which the beam is directed through a substantially transparent medium to one major surface of a liquid crystal layer at an oblique angle providing attenuated reflection the value of which attenuation is modulated by electrically induced refractive index changes in the liquid crystal layer.

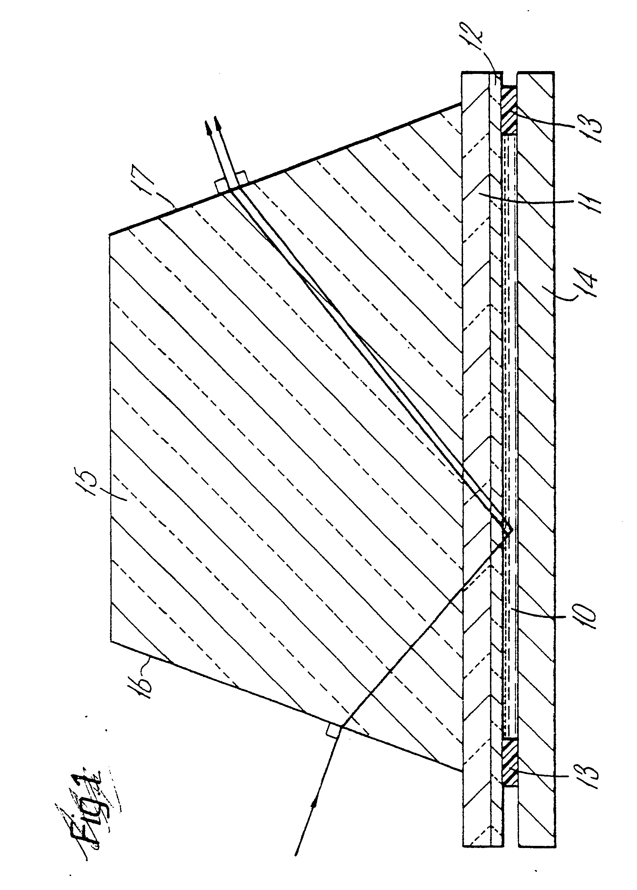

There follows a description of two spatial light modulators embodying the invention in preferred forms. The description refers to the accompanying drawing which is a schematic diagram of the spatial light modulator.

Referring to the drawing a hermetic envelope for a liquid crystal layer 10 is formed by securing a transparent glass sheet 11 carrying a transparent indium tin oxide electrode layer 12 with a perimeter seal 13 to an active silicon slice 14. Cemented to the upper face of sheet 11 is a glass prism 15 whose

entry and exit faces I6 and I7 allow light incident upon the input face I6 to emerge from the output face I7 after suffering reflection at or near the interface between the liquid crystal and electrode layers I0 and I2, having been obliquely incident upon this interface at somewhat less than its critical angle for total internal reflection. It should be evident that the use of the glass sheet II can be dispensed with if the electrode layer I2 can be satisfactorily applied direct to the face I6 of the prism.

The active silicon slice I4 carries a matrix array of electrode pads (not separately illustrated) which are accessed on a row and column basis via gates formed in the slice. These electrode pads co-operate with the electrode layer I2 to define a matrix array of pixels. With the exception of the liquid crystal composition and its surface alignment, the general construction of the liquid crystal cell is substantially similar to that of the display cell described in the aforementioned Patent Specification No. 2079022A. The differences arise primarily because of the difference of application. Thus in the display cell the liquid crystal display mode is dyed cholesteric nematic phase change so as to provide good visibility characteristics when viewed with unpolarised light, whereas in the present application this will not generally be so significant since the polarisation plane sensitivity is already implicit in the oblique illumination of the liquid crystal layer, and typically the incident light is coherent and plane polarised. Also the display cell employs a pleochroic black dye mixture so that absorption is provided over the whole range of the visible spectrum, whereas in the present application a narrow absorption band dye will normally be adequate because the effects of dispersion will generally be such as to require illumination with substantially monochromatic light. It is not required that the dye be transparent to certain planes of polarisation, and hence the dye can be an isotropic dye.

The liquid crystal layer is required to exhibit an electrically controllable gradient in refractive index that will provide a reduction in refractive index with increasing depth beneath the upper surface of the layer by which the incident light enters. This form of gradient is required in order that light entering the layer at large angles of incidence shall be bent round, 'mirage fashion', to leave the layer from the same surface by which it entered the liquid crystal medium.

In the case of a liquid crystal medium exhibiting positive birefringence, one way of providing this form of gradient is to arrange for the light incident upon the upper surface of the liquid crystal layer to be plane polarised in the plane of incidence and for the molecular alignment at the upper surface of the liquid crystal layer to be homeotropic while that at the lower surface is planar. Provided that the medium exhibits dielectric anisotropy, the application of an electric field across the thickness of this layer will change the shape of the gradient. Thus if the liquid exhibits negative dielectric anisotropy, the application of the field will reinforce planar alignment forces in the layer with the result that the fall off in refractive index with increasing depth from the upper surface will be faster in the upper part of the layer. Making this fall off in refractive index faster has the result of shortening the optical path length of the light in the liquid crystal medium, and, since this medium is optically absorbing on account of the presence of the dye, this shortening of optical path length produces an attendant reduction in optical attenuation. In the case of a liquid crystal medium exhibiting positive dielectric anisotropy an equivalent affect is produced by a reduction of applied field strength. If the initial alignment at the upper surface were exactly homeotropic, the application of an electric field can have the effect of causing the molecules to tilt on either one of two possible directions. Advantage can be gained by introducing a 'pre-tilt' bias to favour a particular one of these alternatives. In this case the alignment is not exactly homeotropic at the upper surface but has a large tilt angle approaching 90°.

An alternative way of producing the requisite form of refractive index gradient for a liquid crystal medium exhibiting positive birefringence is to arrange for the light incident upon the upper surface of the light crystal layer to be plane polarised normal to the plane of incidence, and for the molecular alignment to be transverse planar at the upper surface and homeotropic at the lower.

Similarly, in the case of a liquid crystal medium exhibiting negative birefringence, for light plane polarised in the plane of incidence, the requisite gradient form is provided by a molecular alignment which is planar at the upper surface and homeotropic at the lower, while for light plane polarised normal to the plane of incidence the requisite gradient form is provided by homeotropic alignment at the upper surface and transverse planar at the lower.

In each of the foregoing examples of suitable alignments, that at one surface has been planar while that at the other is homeotropic. It should however, be understood that this difference between molecular alignments at the two surfaces is not always essential, thus in the case of a positive birefringence liquid crystal medium exhibiting negative dielectric anisotropy homeotropic alignment may be employed at both surfaces. In this case the layer is illuminated with light plane polarised in the plane of incidence. When an electric field is applied to such a layer the alignment tends toward planar near the plane midway between the upper and lower surfaces of the layer. This provides the requisite form of gradient in the upper half of the layer. The reverse gradient appearing in the lower half is of no consequence since the light does not reach this region.

In a particular example, using a prism l5 having a refractive index n = l.6l7 at 633nm, light was incident upon the interface between layers l0 and l2 at an angle of 70°. The liquid crystal medium l0 was a mixture of 66 wt % of the eutectic nematic mixture marketed by E. Merck of Darmstadt, Germany under the designation ZLI l800 and 34 wt % of the eutectic nematic mixture marketed by BDH of Poole, Dorset under the designation E63, together with a quantity of the relatively low order parameter dye l, 4-bis-N-heptylamino anthraquinone. This formulation exhibits positive birefringence, $n_e = l.60l4$, $n_o = l.4893$, and negative dielectric anisotropy, and was arranged to be homeotropically aligned at both major surfaces of the layer l0.

Theoretical calculations of the behaviour of the light in the liquid crystal layer indicate that the optical path length in the liquid crystal is proportional to the voltage applied and hence there is provided a relatively simple and efficient realisation of an analogue function in the modulator.

In the above-described spatial light modulator the proportion of the light incident upon the surface of the liquid crystal layer that is reflected by the liquid crystal material instead of being refracted tends to detract from the performance of the device, and therefore for most applications this reflected light will be kept to a minimum by operating with an angle of incidence at or near the Brewster angle.

Attention is now turned to an alternative mode of operation where the relationship between the angle of incidence and the refractive indices is altered to make use of a different effect. In this instance amplitude modulation is produced by deliberately altering the reflection coefficient of this reflected light by inducing changes in refractive index of the liquid crystal layer to bring the critical angle closer to the angle of incidence in order to enhance reflection or to bring the Brewster angle closer to the angle of incidence in order to reduce the reflection coefficient. Within the range from the Brewster angle to the critical angle the reflectivity for light plane polarised in the plane of incidence varies from zero to l00% with no change of phase. In this instance it is the refracted component of the light incident upon the upper surface of the liquid crystal layer that needs to be prevented from re-emerging from that surface with sufficient intensity to be a nuisance. Conveniently this refracted light can be absorbed by incorporating a suitable dye into the liquid crystal mixture, or alternatively, provided that there is no risk of a mirage type reflection occurring within the thickness of the liquid crystal layer, an optically absorbing layer (not shown) may be provided on the upper surface of the active silicon slice l4.

## Claims

l. A spatial light modulator characterised in that light is directed through a substantially transparent medium to one major surface of a liquid crystal layer at an oblique angle providing attenuated reflection, the value of which attenuation is capable of being modulated by electrically induced refractive index changes in the liquid crystal layer.

2. A spatial light modulator as claimed in claim l, wherein the variable attenuation is provided by a dye dispersed in the liquid crystal layer.

3. A spatial light modulator as claimed in claim 2, wherein in the absence of an applied field the molecules of the liquid crystal layer are homeotropically aligned at one of its major surfaces and planar aligned at the other.

4. A spatial light modulator as claimed in claim l, which modulator includes means to direct light at a specific angle of incidence upon the liquid crystal layer that for all orientations of the molecules of the liquid crystal layer lies in the range extending from the critical angle to the Brewster angle for said one major surface, which modulator also includes means to absorb substantially all said incident light that is refracted into the liquid crystal layer.

5. A spatial light modulator as claimed in claim l, 2, 3 or 4, wherein the liquid crystal layer is backed by active semiconductive material.

6. A spatial light modulator as claimed in claim 5, wherein the liquid crystal layer is backed by an active silicon slice.

7. A method of spatially modulating a light beam characterised in that the beam is directed through a substantially transparent medium to one major surface of a liquid crystal layer at an oblique angle providing attenuated reflection the value of which attenuation is modulated by electrically induced refractive index changes in the liquid crystal layer.

8. A method as claimed in claim 7, wherein the variable attenuation is provided by a dye dispersed in the liquid crystal layer.

9. A method as claimed in claim 8, wherein the variable attenuation is provided by altering the profile of a refractive index grading set up in the thickness of the liquid crystal layer.

l0. A method as claimed in claim 7, wherein the variable attenuation is provided by directing light at a particular angle of incidence upon the liquid crystal layer that for all orientations of the molecules of the liquid crystal layer lies in the range extending from the critical angle to the Brewster angle and changing the orientation of the molecules of the liquid crystal layer so as to change the effective refractive index seen by incident light and thus the proportion of that light which is refracted into the liquid crystal layer, and wherein substantially all of said refracted light is arranged to be absorbed.

Fig.1